# EUROPÄISCHE PATENTSCHRIFT

(11) **EP 2 245 832 B1**
(45) Veröffentlichungstag und Bekanntmachung des Hinweises auf die Patenterteilung: **06.01.2016**
(21) Anmeldenummer: 08700999.9
(22) Anmeldetag: 07.01.2008
(51) Int. Cl.: H04L 29/06

(54) **VERFAHREN ZUM AUTHENTISIEREN EINER SCHLÜSSELINFORMATION ZWISCHEN ENDPUNKTEN EINER KOMMUNIKATIONSBEZIEHUNG**
METHOD FOR AUTHENTICATING KEY INFORMATION BETWEEN TERMINALS OF A COMMUNICATION LINK
PROCÉDÉ D'AUTHENTIFICATION D'UNE INFORMATION DE CODAGE ENTRE DES POINTS FINAUX D'UNE RELATION DE COMMUNICATION

(43) Veröffentlichungstag der Anmeldung: 03.11.2010
(73) Patentinhaber: Unify GmbH & Co. KG, 81379 München (DE)
(72) Erfinder: ELWELL, John, Nottingham NG2 6LT (GB); FISCHER, Kai, 85598 Baldham (DE)
(74) Vertreter: Fritzsche, Thomas
(86) Internationale Anmeldenummer: PCT/EP2008/000054
(87) Internationale Veröffentlichungsnummer: WO 2009/086845

(56) Entgegenhaltungen:
- WO-A-2006/126202
- FISCHL COUNTERPATH SOLUTIONS J ET AL: "Framework for Establishing an SRTP Security Context using DTLS; draft-ietf-sip-dtls-srtp-framework-00.txt" IETF STANDARD-WORKING-DRAFT, INTERNET ENGINEERING TASK FORCE, IETF, CH, Bd. sip, 12. November 2007 (2007-11-12), XP015053888 ISSN: 0000-0004
- PETERSON NEUSTAR C JENNINGS CISCO SYSTEMS J: "Enhancements for Authenticated Identity Management in the Session Initiation Protocol (SIP); rfc4474.txt" IETF STANDARD, INTERNET ENGINEERING TASK FORCE, IETF, CH, 1. August 2006 (2006-08-01), XP015054984 ISSN: 0000-0003

## Beschreibung

In Kommunikationsnetzen, insbesondere in Voice over IP Kommunikationsnetzen, wird eine Kommunikationsbeziehung bzw. Verbindung häufig gemäß dem SIP- Protokoll (Session Initiation Protocol) gesteuert. Für die Übertragung von Datenströmen bzw. Multimediadatenströmen, d.h. der Nutzinformation bzw. der Video- und/oder Sprachinformation, wird meist das RTP-Protokoll (Real Time Protocol) verwendet. Das RTP- Protokoll ist im RFC Standard 1889 bzw. seit 2003 im RFC Standard 3550 definiert. Aufgrund gestiegener Sicherheitsbedürfnisse werden die Datenströme seit geraumer Zeit verschlüsselt übertragen, wobei dieses gesicherte RTP- Protokoll (SRTP) im RFC- Standard 3711 beschrieben ist. Für das SRTP- Protokoll sind gemeinsame geheime Schlüssel erforderlich, die mit einem geeigneten Protokoll ausgetauscht werden, wobei derartige Protokolle der Fachwelt auch als Key Management Protocols bekannt sind.

Ein bekanntes Key Management Protocol ist als MIKEY Protocol bekannt, das im RFC- Standard RFC 3830 definiert ist, wobei dieses Protokoll in das Signalisierungsprotokoll SIP eingebettet ist.

Ein weiteres Key Management Protocol ist das DTLS- SRTP- Protokoll (Data Transport Layer Security - Secure Transport Protocol). Das DTLS- Protokoll basiert auf dem TLS- Protokoll (Transport Layer Security) und stellt ein Verschlüsselungsprotokoll für Datenübertragungen über das Internet dar. Das DTLS- Protokoll kann auch über unzuverlässigere Protokolle wie UDP- Protokoll (User Datagram Protocol) eingesetzt werden. Das DTLS- SRTP- Protokoll ist innerhalb des Nutzdatenkanals bzw. Mediendatenkanals realisiert, wobei der Schlüsselaustausch durch Zertifikate und den assoziierten privaten Schlüsseln authentisiert wird. Die Zertifikate werden nicht von einer vertrauenswürdigen PKI- Instanz (Public Key Infrastructure) sondern durch die jeweiligen Endpunkte bzw. Endeinrichtung selbst signiert. Derartige Zertifikate sind nicht geeignet Endpunkte zu authentisieren, die in das Key Management Protocol einbezogen sind, da kein Vertrauensverhältnis zu einem gemeinsamen Sicherheitsanker existiert. Um die Authentisierung mit der Einrichtung zu sichern, mit der eine Kommunikationsbeziehung vorgesehen ist, wird eine oder werden mehrere in der Fachwelt als Fingerprint bezeichnete Sicherungsinformationen gebildet und innerhalb der SIP- Message übertragen. Der Fingerprint ist jeweils auf einen öffentlichen Schlüssel oder ein Zertifikat bezogen und stellt üblicherweise den Hashwert einer auf den öffentlichen Schlüssel oder Zertifikat angewendeten Hashfunktion dar. Der Hashwert ist eine gegenüber dem öffentlichen Schlüssel bzw. Zertifikat kürzere Zahlenfolge, wobei der Hashwert den öffentlichen Schlüssel jedoch eindeutig identifiziert. Der Fingerprint wird innerhalb der SIP- Nachricht durch eine Signatur - beispielsweise nach dem RFC Standard 4474 gesichert, die allgemein für die Sicherung des Kopfteils bzw. Headers und des SIP- Bodys vorgesehen ist, wobei der SIP- Body den Nutzdatenteil einer SIP- Nachricht darstellt, in dem die zu übermittelnde Information für Nutz- und Mediendaten übertragen wird.

Bezogen auf eine SIP- Nachricht, insbesondere eine INVITE-Nachricht, wird mit Hilfe eines Schlüssel- Management- Protokolls die in einem Medienkanal übertragene Schlüsselinformation durch zumindest ein von den Endpunkten signiertes Zertifikat authentisiert und in den Nutzteil einer SIP- Nachricht wird zumindest ein Fingerprint des Zertifikats zur Authentisierung der zu übertragenden Schlüsselinformation eingefügt. In den Header einer SIP- Nachricht wird SIP-gemäß eine Datumsinformation, Zertifikatshinweisinformation und eine die Identitätsinformation des die SIP- Nachricht bildenden Endpunkts eingefügt.

In WO 2006/126202 A2 ist beschrieben, dass über ein Paketkommunikationsnetzwerk eine erste Nachricht von einem ersten Endbenutzer in einer ersten aggregierten Organisation empfangen wird, um einen Anruf zu einem zweiten Endbenutzer in einem zweiten aggregierten Organisation zu platzieren. In Reaktion auf die erste Nachricht werden jeweilige Werte eines oder mehrerer Sicherheitsattribute, die eine Wahrscheinlichkeit anzeigen, dass der Anruf ein Spam-Anruf ist, zugewiesen. Eine zweite Nachricht mit mindestens einem der entsprechenden Werte wird an den zweiten Endbenutzer übertragen.

In PETERSON NEUSTAR C JENNINGS CISCO SYSTEMS J: "Enhancements for Authenticated Identity Management in the Session Initiation Protocol (SIP); rfc4474.txt" IETF STANDARD, INTERNET ENGINEERING TASK FORCE, IETF, CH, 1. August 2006 (2006-08-01), XP015054984 ISSN: 0000-0003 ist ein Mechanismus zur sicheren Identifizierung von Erstellern von SIP-Nachrichten beschrieben, wobei zwei neue SIP-Header-Felder, Identität, für eine Signatur, die für die Validierung der Identität verwendet wird, und Identitäts-Info, für einer Referenz auf das Zertifikat des Unterzeichners, definiert werden.

In FISCHL COUNTERPATH SOLUTIONS J ET AL: "Framework for Establishing an SRTP Security Context using DTLS; draft-ietf-sip-dtls-srtp-framework-00.txt" IETF STANDARD-WORKING-DRAFT, INTERNET ENGINEERING TASK FORCE, IETF, CH, Bd. sip, 12. November 2007 (2007-11-12), XP015053888 ISSN: 0000-0004, ist beschrieben, wie das SIP- Protokoll zu benutzen ist, um einen SRTP- Sicherheitskontext unter Verwendung des DTLS- Protokolls einzurichten. Ein Transportmechanismus für ein Fingerprint-Merkmal im SDP- Protokoll ist beschrieben, das den Schlüssel identifiziert, der während des DTLS handshake präsentiert wird.

Die Qualität der Ende-zu-Ende-Sicherung der Nutz- und Mediendaten hängt von der Authentisierung des Fingerprints ab. Werden SIP- Nachrichten über Netze mehrerer Carrier bzw. Netzbetreiber übertragen, kommt es vor, dass Inhalte von SIP-Nachrichten geändert werden wie beispielsweise die Änderung von Transportadressen in Session Board Controllern der jeweiligen Netzbetreiber. In diesen Fällen ist die SIP- Identity Signatur wie in dem Standard RFC 4474 beschrieben nicht mehr gültig und muss erneut durch jeweiligen Netzbetreiber gebildet werden. Hierdurch ergibt sich eine Angriffsmöglichkeit auf die Authentizität des Fingerprints in der Art, dass in den zwischengeschalteten Netzen der Netzbetreiber der Fingerprint des Zertifikats durch einen Fingerprint desjenigen Zertifikats ersetzt wird, das dem zwischengeschalteten Netz des Netzbetreibers zugeordnet ist.

Die der Erfindung zugrunde liegende Aufgabe besteht darin, die Sicherheit bei Übertragung eines von einem Zertifikat abgeleiteten Fingerprints auch über mehrere Netze unterschiedlicher Netzbetreiber zu gewährleisten. Die Aufgabe wird ausgehend von den Merkmalen der Patentansprüche 1 und 15 gelöst.

Der wesentliche Aspekt des erfindungsgemäßen Verfahrens ist darin zu sehen, dass mit Hilfe eines Schlüssel-Management-Protokolls die aus einer Domäne übertragene Schlüsselinformation durch von der einen Domäne und einer anderen Domäne jeweils zugeordneten Endpunkten signierte Zertifikate in der anderen Domäne authentisiert wird und durch die eine Domäne in den Nutzteil einer SIP- Nachricht zumindest ein Fingerprint eines von dem Endpunkt der einen Domäne signierten Zertifikats eingefügt ist. In den Header einer SIP- Nachricht wird durch die eine Domäne eine Datumsinformation, Zertifikatshinweisinformation und eine die Identitätsinformation des die SIP- Nachricht bildenden Endpunkts der einen Domäne eingefügt. Erfindungsgemäß wird durch die eine Domäne die Identitätsinformation in einen Bereich des Headers oder des Nutzteils kopiert und eine Signatur über den Fingerprint, die Datumsinformation und die kopierte Identitätsinformation gebildet und in einen weiteren Bereich des Headers einer SIP-Nachricht eingefügt. Optional kann die Zertifikatshinweisinformation in die Bildung der Signatur einbezogen werden.

Ein wesentlicher Vorteil des erfindungsgemäßen Verfahrens besteht darin, dass bei einer Kommunikationsbeziehung zwischen zwei Endpunkten bzw. Endgeräten, die über mehrere Netze mehrerer Netzbetreiber geführt ist, auch bei einer Änderung der Identitätssignatur durch die Netze unterschiedlicher Netzbetreiber die zusätzliche erfindungsgemäß gebildete und eingefügte Signatur unbeeinflusst bleibt und damit eine eindeutige Authentisierung der übermittelten Schlüsselinformation erreicht wird. Diese eindeutige Authentisierung der Schlüsselinformation wird auch dann noch erreicht, wenn die Identitätsinformation in den Netzen der unterschiedlichen Betreiber geändert wird. Durch das erfindungsgemäße Verfahren können folglich Angriffe auf die Sicherheit der Authentisierung in den Netzen der unterschiedlichen Netzbetreiber vermieden werden.

Gemäß einer vorteilhaften Ausgestaltung des erfindungsgemäßen Verfahrens wird zumindest eine weitere im Zusammenhang mit der Authentisierung stehende Information in der SIP- Nachricht in die Signaturbildung einbezogen. Hierdurch können diejenigen Informationen, die die Sicherheit noch weiter erhöhen, einbezogen werden.

Nach einer Weiterbildung des erfindungsgemäßen Verfahrens ist als Schlüssel-Management-Protokoll das DTLS- SRTP- Verfahren (Data Transport Layer Security - Secure Transport Protocol) vorgesehen. Dieses Protokoll ist besonders für die Sicherung von zu übertragenden Multimedia- Verkehr gemäß dem SIP- Protokoll vorgesehen.

Gemäß einer weiteren vorteilhaften Ausgestaltung des erfindungsgemäßen Verfahrens ist die Identitätsinformation, die Datumsinformation und die Zertifikatshinweisinformation in vorgegebene Felder des Headers der SIP- Nachricht und der Fingerprint in ein vorgegebenes Feld des Nutzteils der SIP-Nachricht eingefügt und für die Bildung der Signatur wird zumindest der die Informationen enthaltende Teil der vorgegebenen Felder einbezogen. Dies bedeutet, dass in den vorgegebenen Feldern die Information das jeweilige Feld nicht vollständig belegen muss und in die Signaturbildung entweder nur die in den Feldern enthaltene Information oder auch das vollständige Feld einbezogen wird.

Weitere vorteilhafte Weiterbildungen des erfindungsgemäßen Verfahrens und eine Ausgestaltung einer erfindungsgemäßen A-nalyseeinheit sind weiteren Ansprüchen zu entnehmen.

Im Folgenden wird das erfindungsgemäße Verfahren anhand von zwei zeichnerischen Darstellungen näher erläutert. Dabei zeigen
- Figur 1: ein Ablaufdiagramm zur Erläuterung der erfindungsgemäßen Verfahrens und
- Figur 2: den Aufbau der in Figur 1 angedeuteten SIP- Nachrichten.

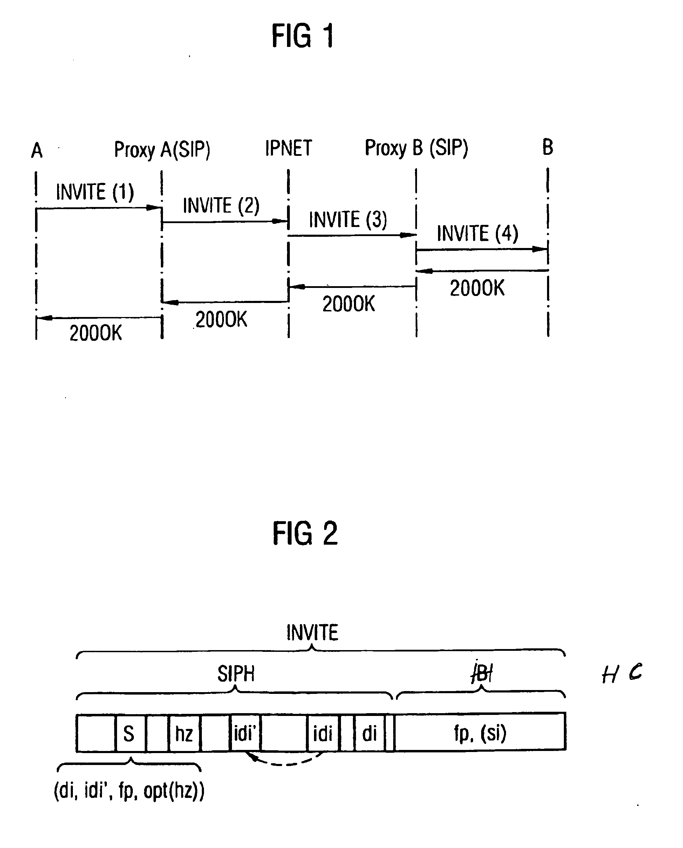

Figur 1 zeigt in einem Ablaufdiagramm den Aufbau einer Kommunikationsbeziehung zwischen einem Endpunkt A und einem Endpunkt B - in Figur 1 durch die Bezeichnungen A und B angedeutet. Nach den beiden Endpunkten A,B ist jeweils in Richtung Netzwerk IPNET ein Proxy A bzw. Proxy B angeordnet, der im Ausführungsbeispiel durch einen SIP- Proxy realisiert ist - in Figur 1 durch die Bezeichnung Proxy A(SIP), Proxy B (SIP) angedeutet. Zwischen Proxy A und Proxy B sei für das Ausführungsbeispiel zumindest ein Netzwerk IPNET eines Netzbetreibers angenommen, beispielsweise das Internet und ein Betreiber des Internets. Die Endpunkte A,B sowie die Proxy A und Proxy B und das Netzwerk INPET sind in dem Ablaufdiagramm jeweils durch eine vertikale, gestrichelte Linie repräsentiert.

Ein SIP Proxy ist meist in einem SIP Proxy Server realisiert und ist für die Umsetzung eines Namens in eine IP- Adresse in einer SIP- Domain und umgekehrt zuständig. In einem SIP Proxy Server werden zusätzlich Dienste, Leistungsmerkmale und die Skalierbarkeit zu SIP- Netzwerken realisiert. Eine SIP- Domain ist durch die Domain- Angabe in einer URI (Universal Resource Identifier) angegeben, wobei der SIP Proxy für diese Domain - im Ausführungsbeispiel Domäne A und B - die Adressumsetzung übernimmt.

Ein Endpunkt A,B bzw. ein SIP- Endpunkt kann durch ein SIP-Endgerät oder durch ein Gateway oder durch einen Leistungsmerkmal- Server, beispielsweise einen Konferenzserver, realisiert sein, wobei als VoIP- Protokoll das SIP- Protokoll SIP vorgesehen ist.

Für das Ausführungsbeispiel sei angenommen, dass im Rahmen des SIP Protokolls SIP für die Übertragung der Voice oder Multimediainformation als gesichertes RTP- Protokoll das SRTP- Protokoll SRTP eingesetzt wird, bei dem die Schlüssel bzw. Schlüsselinformation mit einem Key Management Protocol ausgetauscht werden. Weiterhin sei angenommen, dass als Key Management Protocol das DTLS- SRTP- Protokoll (Data Transport Layer Security - Secure Transport Protocol) vorgesehen ist. Das DTLS- Protokoll basiert auf dem TLS- Protokoll (Transport Layer Security) und stellt ein Verschlüsselungsprotokoll für Datenübertragungen über Netzwerke mit Internetprotokoll dar. Das DTLS- SRTP- Protokoll ist innerhalb des Nutzdatenkanals bzw. Mediadatenkanals realisiert, wobei der Schlüsselaustausch durch Zertifikate und den assoziierten privaten Schlüsseln authentisiert wird. Die Zertifikate werden nicht von einer vertrauenswürdigen PKI- Instanz (Public Key Infrastructure) sondern durch die jeweiligen Endpunkte A,B bzw. Endeinrichtung selbst signiert. Um die Authentisierung mit der Einrichtung zu sichern, mit der eine Kommunikationsbeziehung vorgesehen ist, wird eine oder mehrere in der Fachwelt als Fingerprint fp bezeichnete Sicherungsinformatiorien gebildet und innerhalb der SIP- Message gesendet. Der Fingerprint fp ist jeweils auf einen öffentlichen Schlüssel oder ein Zertifikat bezogen und stellt üblicherweise den Hashwert einer auf den öffentlichen Schlüssel bzw. Zertifikat angewendeten Hashfunktion dar. Der Hashwert ist eine gegenüber dem öffentlichen Schlüssel kürzere Zahlenfolge, wobei der Hashwert den öffentlichen Schlüssel jedoch eindeutig identifiziert. Der Fingerprint fp wird innerhalb der SIP- Nachricht durch eine Signatur - beispielsweise nach dem RFC Standard 4474 gesichert, die allgemein für die Sicherung des Kopfteils bzw. Headers und des SIP- Bodys vorgesehen ist. Die Signatur stellt sicher, dass die Schlüsselinformation von dem ursprünglichen Signaturgeber stammt.

Bei einem Aufbau einer Kommunikationsbeziehung gemäß dem SIP-Protokoll SIP mit einem SIP Proxy wird eine INVITE- Nachricht INVITE (1) von Endpunkt A an den Proxy A übermittelt, der der SIP- Domain A zugeordnet ist. In Figur 2 ist der Aufbau einer zwischen Proxy A und dem Netzwerk IPNET übermittelten INVITE-Nachricht INVITE (2) dargestellt, wobei im Weiteren nur die für die Erläuterung des erfindungsgemäßen Verfahrens erforderlichen Teile bzw. Felder der INVITE- Nachricht INVITE einschließlich der enthaltenen Information beschrieben werden.

Eine INVITE- Nachricht INVITE (1) weist einen SIP- Header SIPH und einen Body bzw. Nutzteil C auf, wobei im Nutzteil C vom Endpunkt A in einem SDP- Feld (Session Description Protocol) eingefügte ein oder mehrere von öffentlichen Schlüsseln bzw. Zertifikaten des Endpunkts abgeleitete Fingerprints fp übertragen werden - in Figur 2 durch die Bezeichnung fp (si) angedeutet -, die zur Authentisierung der Schlüsselinformation si verwendet wurden. In den SDP- Feldern werden generell die Parameter einer Kommunikationsbeziehung übertragen. Im SIP- Header SIPH sind eine Identitätsinformation idi und eine Datumsinformation di eingetragen - in Figur 2 durch die Bezeichnung idi, di angedeutet, wobei die Identitätsinformation idi in ein spezielles Feld - in der Fachwelt als From Header bezeichnet - und die Datumsinformation di in ein Datumsfeld eingetragen wird. Der Fingerprint fp repräsentiert hierbei das Zertifikat des Endpunkts A, das zur Authentisierung der Schlüsselinformation si verwendet wurde.

Durch den Proxy A wird die im SIP- Header SIPH der SIP- Nachricht INVITE (2) enthaltene Identitätsinformation idi kopiert und die Kopie idi' in ein zusätzliches Feld bzw. Element des SIP- Headers SIPH eingefügt. Dieses Kopieren und Einfügen der Identitätsinformation idi kann alternativ auch durch den Endpunkt A erfolgen. Zusätzlich wird ausschließlich durch den Proxy A in ein Zertifikatsfeld eine Hinweisinformation hz für ein Domänenzertifikat eingetragen, wobei die Hinweisinformation hz eine Netzadresse - insbesondere Internetadresse - angibt, in der das Zertifikat der Domäne A gespeichert ist bzw. abrufbar ist. Ein Domänenzertifikat repräsentiert eine signierte öffentliche Schlüsselinformation, mit dem eine übertragene, mit einer privaten Schlüsselinformation vorgenommene Signatur verifiziert wird.

Um eine eindeutige Authentisierung der Schlüsselinformation si bei einem Nutzer bzw. beim Proxy B oder Endpunkt B zu erreichen, wird erfindungsgemäß eine Signatur S über die Datumsinformation di, die kopierte Identitätsinformation idi', den im Nutzteil C enthaltenen Fingerprint fp und optional über die Hinweisinformation hz gebildet und in ein zusätzliches Feld des SIP- Headers SIPH eingefügt - in der Figur 2 durch die Angaben di,idi',fp,opt(hz) > S angedeutet. Die Signatur S wird mit Hilfe einer von der jeweiligen Proxy A,B verwalteten Signaturinformation bzw. einer privaten Schlüsselinformation und einem aus der Datumsinformation di, der kopierten Identitätsinformation idi', der Hinweisinformation hz und den im Nutzteil C enthaltenen Fingerprint fp abgeleiteten Hashwert berechnet. Die so gebildete INVITE- Nachricht INVITE (2) kann anschließend, wie in Figur 1 dargestellt, über ein oder mehrere Netzwerke IPNET mit IP- Protokoll zu dem Proxy B und dem Endpunkt B übermittelt werden - in Figur 1 durch INVITE (3), INVITE (4) angedeutet.

Beispielhaft ist ein Auszug aus einem Header SIPH einer INVITE- Nachricht INVITE gemäß dem SIP- Protokoll angegeben, die vom Proxy A über das Netzwerk IPNET an den Endpunkt B übertragen wird:

| | |
|---|---|
| INVITE sip:b@domainb.com SIP/2.0 | 1) |
| Via: SIP/2.0/TLS pc.domaina.com;branch= zEz67in32Wer4i | 2) |
| To: B <sip:b@domainb.com> | 3) |
| From: A <sip:a@domaina.com>;tag=1234567890 | 4) |
| Call-ID: 12345678901234 | 5) |
| CSeq: 987654 INVITE | 6) |
| Max-Forwards: 50 | 7) |
| Date: Thu, 03 Jan 2008 15:07:00 GMT | 8) |
| Contact: <sip:a@pc.domaina.com> | 9) |
| Content-Type: application/sdp | 10) |
| Content-Length: 123 | 11) |
| DomainCert-Info: <https://domaina.com/proxya.cer>; alg=rsa-sha1 | 12) |
| Original-Identity-Info: A <sip:a@domaina.com> | 13) |
| Signature: "jjsRdiOPQZYOy2wrVghuhcsMbHWUSFxI+p6q5TOQXHMmz | 14) |
| 6uEo3svJsSH49th8qcefQBbHC00VMZr2k+t6VmCvPonWJM GvQTBDqghoWeLxJfzB2a1pxAr3VgrB0SsjcdVcunyaZucy RlB YQTLqWzJ+KVhPKbfU/pryhVn9Jcqe=" | |

| | |
|---|---|
| Erläuterung: 1) Nachrichtentyp, Zieladresse (URI), SIP- Version 2) IP-Adresse, Portnummer und das Transportprotokoll für die Rückantwort der Nachricht 3) Displayname von B und dessen URI 4) Displayname von A und dessen URI (Identifikationsinformation idi) 5) Zufallszeichenkette als eindeutige Nummer für eine Kommunikationsbeziehung 6) Sequenznummer (bezogen auf Nachrichtentyp) 7) maximale Anzahl Proxy Server (wird durch jeden durchlaufenen Proxy dekrementiert) 8) Datumsinformation di 9) SIP-Adresse des Empfängers für eine direkte Kommunikation 10) Datentyp im Nutzteil C (beispielsweise gemäß SDP- Protokoll) 11) Länge des Nutzteils 12) Hinweisinformation hz für Domänenzertifikat 13) kopierte Identifikationsinformation idi' 14) Signatur S | |

Weiterhin ist beispielhaft ein Auszug aus einem SIP- Nutzteil C angegeben:
v=0
   15)
o=- 6418913922105372816 2105372818 IN IP4 192.0.2.1
   15)
s=example2
   15)
c=IN IP4 192.0.2.1
   15)
t=0 0
   16)
m=audio 54113 RTP/SAVP 0
   17)
a=fingerprint:SHA-1
   18)
   4A:AD:B9:B1:3F:82:18:3B:54:02:12:DF:3E:5D:49:6B:19:E5:7C:AB m=video 54115 RTP/SAVP 0
   a=fingerprint:SHA-1
   4A:AD:B9:B1:3F:82:18:3B:54:02:12:DF: 3E:5D:49:6B:19:E5:7C:AB

Erläuterung:
15) RTP (Real Time Protocol)- Session - Parameter
16) Zeitbeschreibung
17) Medientyp (beispielsweise Audio)
18) Fingerprint

Hierbei können für die INVITE- Nachricht INVITE durch die die INVITE- Nachricht INVITE übertragenden Netzwerke netzspezifische Signaturen berechnet und in die INVITE- Nachricht INVITE eingefügt werden, ohne dass die in den SIP- Header SIPH eingefügte Signatur S verändert bzw. beeinflusst wird. Dies bedeutet, dass im Proxy B durch die Überprüfung der im weiteren zusätzlichen Feld enthaltenen Signatur S die in einem Medienkanal übermittelte Schlüsselinformation si eindeutig authentisiert werden kann, d.h. der Fingerprint fp ist eindeutig eingefügt durch den Proxy A bzw. die Domäne A. Endpunkt B kann anschließend aus der empfangenen INVITE- Nachricht INVITE (4) die Identitätsinformation idi und die kopierte Identitätsinformation idi' lesen und einem Benutzer von Endpunkt B anzeigen.

Gemäß dem SIP- Protokoll SIP wird im Endpunkt B eine Antwortnachricht 200OK gebildet und über den Proxy B, das Netzwerk IPNET und den Proxy A an den Endpunkt A übermittelt. In die Antwortnachricht 200OK ist das Bilden und Einfügen der Signatur S nicht mehr erforderlich, da der Endpunkt A einschließlich der Schlüsselinformation si durch die eindeutige Identitätsinformation idi und kopierte Identitätsinformation idi' identifiziert bzw. authentisiert ist.

Mit Hilfe des erfindungsgemäßen Verfahren erfolgt die Authentisierung für die Schlüsselinformation des Endpunkts B im Endpunkt A bzw. Proxy A in gleicher Weise wie vorhergehend beschrieben, jedoch ist anstelle einer INVITE- Nachricht INVITE eine UPDATE- Nachricht vorgesehen - in Figur 1 nicht dargestellt.

## Patentansprüche

1. Verfahren zum Authentisieren einer Schlüsselinformation (si) zwischen einer Domäne und einer anderen Domäne jeweils zugeordneten Endpunkten (A,B) einer vorgesehenen Kommunikationsbeziehung gemäß dem Session Initiation Protokoll,
a) bei dem mit Hilfe eines Schlüssel-Ṁanagement-Protokolls die übertragene Schlüsselinformation (si) aus einer Domäne durch zumindest ein von den Endpunkten (A,B) signiertes Zertifikat in der anderen Domäne authentisiert wird,
b) bei dem durch die eine Domäne in den Nutzteil (C) einer SIP- Nachricht (INVITE (2)) zumindest ein Fingerprint (fp (si)) eines von dem Endpunkt (A,B) der einen Domäne signierten Zertifikats eingefügt wird,
c) bei dem durch die eine Domäne in den Header (SIPH) der SIP- Nachricht (INVITE (2)) eine Datumsinformation (di), Zertifikatshinweisinformation (hz) und eine Identitätsinformation (idi) des die SIP- Nachricht (INVITE (2)) bildenden Endpunkts (A,B) der einen Domäne eingefügt wird,
**dadurch gekennzeichnet, dass**
d) durch die eine Domäne die Identitätsinformation (idi) kopiert wird und die kopierte Identitätsinformation (idi') in einen Bereich des Headers (SIPH) oder des Nutzteils (C) der SIP- Nachricht (INVITE (2)) eingefügt wird, und
e) durch die eine Domäne eine Signatur (S) über den Fingerprint (fp), die Datumsinformation (di) und die kopierte Identitätsinformation (idi') gebildet und in ein zusätzliches Feld des Headers (SIPH) der SIP- Nachricht (INVITE (2)) eingefügt wird.

2. Verfahren nach Anspruch 1,
**dadurch gekennzeichnet,**
**dass** zusätzlich die Zertifikatshinweisinformation (hz) in die Bildung der Signatur (S) einbezogen wird.

3. Verfahren nach Anspruch 1 oder 2,
**dadurch gekennzeichnet,**
**dass** zumindest eine weitere im Zusammenhang mit der Authentisierung stehende Information in der SIP- Nachricht (INVITE (2)) in die Bildung der Signatur (S) einbezogen wird.

4. Verfahren nach einem der vorhergehenden Ansprüche,
**dadurch gekennzeichnet,**
**dass** als Schlüssel-Management-Protokoll das DTLS- SRTP- Verfahren (Data Transport Layer Security - Secure Transport Protocol) vorgesehen wird, wobei die Schlüsselinformation (si) in einem Medienkanal übertragen wird.

5. Verfahren einem der vorhergehenden Ansprüche,
**dadurch gekennzeichnet,**
**dass** die Identitätsinformation (idi), die Datumsinformation (di) und die Zertifikatshinweisinformation (hz) in vorgegebene Felder des Headers (SIPH) der SIP- Nachricht (INVITE (2)) und der Fingerprint (fp) in ein vorgegebenes Feld des Nutzteils (C) der SIP- Nachricht (INVITE) eingefügt werden, und dass für die Bildung der Signatur (S) zumindest der die Informationen enthaltende Teil der vorgegebenen Felder einbezogen wird.

6. Verfahren nach einem der vorhergehenden Ansprüche,
**dadurch gekennzeichnet,**
**dass** die Zertifikatshinweisinformation (hz) einen Hinweis enthält, wo das Zertifikat derjenigen Domäne hinterlegt ist, in der die SIP- Nachricht (INVITE (2)) gebildet wird.

7. Verfahren nach Anspruch 6,
**dadurch gekennzeichnet**,
das die Zertifikatshinweisinformation (hz) durch eine Internetlink-Angabe oder eine URI- Adresse repräsentiert wird.

8. Verfahren einem der vorhergehenden Ansprüche,
**dadurch gekennzeichnet,**
**dass** die SIP- Nachricht (INVITE (2)) in einem Endpunkt (A,B) gebildet wird und dass das Kopieren der Identitätsinformation (idi) in einen Bereich des Headers (SIPH), das Einfügen der Zertifikatshinweisinformation (hz) und das Bilden der Signatur (S) und das Einfügen in einen weiteren Bereich des Headers (SIPH) in der Domäne des die SIP- Nachricht (INVITE (2)) bildenden Endpunkts (A,B) durchgeführt wird.

9. Verfahren nach einem der vorhergehenden Ansprüche,
**dadurch gekennzeichnet,**
**dass** die kopierte Identitätsinformation (idi') und die Signatur (S) in zusätzliche Bereiche des Headers (SIPH) der SIP-Nachricht (INVITE (2)) eingefügt wird.

10. Verfahren nach einem der vorhergehenden Ansprüche,
**dadurch gekennzeichnet,**
**dass** zusätzlich eine SIP- Identitätsinformation gemäß dem RFC- Standard 4474 gebildet und damit der Header (SIPH) und der Nutzteil (C) der SIP- Nachricht (INVITE (2)) signiert wird.

11. Verfahren einem der vorhergehenden Ansprüche,
**dadurch gekennzeichnet,**
**dass** ein Endpunkt (A,B) durch ein Endgerät mit Internetprotokoll oder durch einen Gateway oder durch einen Server repräsentiert wird, und dass die Domäne durch einen VoIP- Switch, einen Session Border Controller oder durch einen VoIP- SIP-Proxy repräsentiert wird.

12. Verfahren einem der vorhergehenden Ansprüche,
**dadurch gekennzeichnet,**
**dass** der Fingerprint (fp (si)) in dem Nutzteil (C) der SIP-Nachricht (INVITE (2)) durch eine Signatur nach dem RFC Standard 4474 gesichert wird.

13. Verfahren einem der vorhergehenden Ansprüche,
**dadurch gekennzeichnet,**
**dass** das Kopieren und Einfügen der Identitätsinformation (idi) durch einen Proxy (Proxy A(SIP)) erfolgt.

14. Verfahren einem der Ansprüche 1 bis 12,
**dadurch gekennzeichnet,**
**dass** das Kopieren und Einfügen der Identitätsinformation (idi) durch einen Endpunkt (A) erfolgt.

15. Vorrichtung (A, Proxy A(SIP)), die einer Domäne zugeordnet ist, und Mittel zur Durchführung des Verfahrens zumindest eines der Patentansprüche 1 bis 14 umfasst.

## Claims

1. A method for authenticating a piece of key information (si) between one domain and another domain of respectively associated terminals (A, B) of a planned communication connection according to the Session Initiation Protocol,
a) in which the transmitted piece of key information (si) from one domain is authenticated in the other domain by at least one certificate signed by the terminal points (A, B) with the aid of a key management protocol,
b) in which at least one fingerprint (fp (si)) of a certificate signed by the terminal (A, B) of the one domain is inserted by the one domain into the body (C) of an SIP message (INVITE (2)),
c) in which a piece of date information (di), certificate reference information (hz) and a piece of identity information (idi) of the terminal (A, B) generating the SIP message (INVITE (2)) of the one domain is inserted by the one domain into the header (SIPH) of the SIP message (INVITE (2)),
**characterized in that**
d) the identity information (idi) is copied by the one domain and the copied identity information (idi') is inserted into an area of the header (SIPH) or the body (C) of the SIP message (INVITE (2)), and
e) a signature (S) from the fingerprint (fp), the date information (di) and the copied identity information (idi') is generated by the one domain and inserted into an additional field of the header (SIPH) of the SIP message (INVITE (2)).

2. The method according to Claim 1,
**characterized in that**
the certificate reference information (hz) is also included when generating the signature (S).

3. The method according to Claim 1 or 2,
**characterized in that**,
at least one additional piece of information related to the authentication is included in the SIP message (INVITE (2)) when generating the signature (S).

4. The method according to one of the preceding claims,
**characterized in that**
the DTLS-SRTP protocol (Data Transport Layer Security - Secure Transport Protocol) is provided as the key management protocol, wherein the key information (si) is transmitted in a media channel.

5. The method according to one of the preceding claims,
**characterized in that** the identity information (idi), the date information (di) and the certificate reference information (hz) is inserted in predefined fields of the header (SIPH) of the SIP message (INVITE (2)), and the fingerprint (fp) is inserted in a predefined field of the body (C) of the SIP message (INVITE), and that for generating the signature (S), at least the part of the predefined fields containing this information is included.

6. The method according to one of the preceding claims,
**characterized in that**
the certificate reference information (hz) contains a reference placing the certificate in the domain in which the SIP message (INVITE (2)) is generated.

7. The method according to Claim 6,
**characterized in that**
the certificate reference information (hz) is represented by an Internet link specification or a URI address.

8. The method according to one of the preceding claims,
**characterized in that**
the SIP message (INVITE (2)) is generated in a terminal (A, B), and that the copying of the identity information (idi) in one area of the header (SIPH), the inserting of the certificate reference information (hz) and the generating of the signature (S) and the inserting in another area of the header (SIPH) is performed in the domain of the terminal (A, B) which generates the SIP message (INVITE (2)).

9. The method according to one of the preceding claims,
**characterized in that**
the copied identity information (idi') and the signature (S) are inserted into additional areas of the header (SIPH) of the SIP message (INVITE (2)).

10. The method according to one of the preceding claims,
**characterized in that**
a piece of SIP identity information is also generated according to RFC Standard 4474 and, as a result, the header (SIPH) and the body (H) of the SIP message (INVITE (2)) are signed.

11. The method according to one of the preceding claims,
**characterized in that**
one terminal (A, B) is represented by a terminal device with an Internet protocol or by a gateway or by a server, and that the domain is represented by a VoIP switch, a session border controller or by a VoIP-SIP proxy.

12. The method according to one of the preceding claims,
**characterized in that**
the fingerprint (fp (si)) in the body (C) of the SIP message (INVITE (2)) is secured by a signature according to RFC Standard 4474.

13. The method according to one of the preceding claims,
**characterized in that**
the identity information (idi) is copied and inserted by a proxy (Proxy A(SIP)).

14. The method according to one of Claims 1 through 12,
**characterized in that** the identity information (idi) is copied and inserted by a terminal (A).

15. A device (A, Proxy A(SIP)), which is associated with a domain, and which comprises means for performing the method of least one of the patent claims 1 through 14.

## Revendications

1. Procédé d'authentification d'un élément d'information de clé (si) entre un domaine et un autre domaine de terminaux respectivement associés (A, B) d'une relation de communication planifiée conformément au Protocole d'ouverture de session,
a) dans lequel l'élément transmis de l'information de clé (si) à partir d'un domaine est authentifié dans l'autre domaine par au moins un certificat signé par les points terminaux (A, B) à l'aide d'un protocole de gestion de clés,
b) dans lequel au moins une empreinte digitale (fp (si)) d'un certificat signé par le terminal (A, B) d'un domaine est insérée par ledit un domaine dans le corps (C) d'un message SIP (INVITE (2)),
c) dans lequel un élément de l'information de date (di), l'information de référence du certificat (hz) et un élément de l'information d'identité (idi) du terminal (A, B) générant le message SIP (INVITE (2)) dudit un domaine sont insérés par ledit un domaine dans l'en-tête (SIPH) du message SIP (INVITE (2)),
**caractérisé en ce que**
d) l'information d'identité (idi) est copiée par ledit un domaine et l'information d'identité copiée (idi') est insérée dans une zone de l'en-tête (SIPH) ou du corps (C) du message SIP (INVITE (2)), et
e) une signature (S) de l'empreinte digitale (fp), l'information de date (di) et l'information d'identité copiée (idi') sont générées par ledit un domaine et insérées dans un champ supplémentaire de l'en-tête (SIPH) du message SIP (INVITE (2)).

2. Procédé selon la revendication 1, **caractérisé en ce que** l'information de référence du certificat (hz) est également incluse lors de la génération de la signature (S).

3. Procédé selon la revendication 1 ou 2, **caractérisé en ce que**, au moins un élément supplémentaire de l'information en rapport avec l'authentification est inclus dans le message SIP (INVITE (2)) lors de la génération de la signature (S).

4. Procédé selon l'une quelconque des revendications précédentes, **caractérisé en ce que** le protocole DTLS-SRTP (Data Transport Layer Security - Secure Transport Protocol, Protocole de sécurité de la couche de transport de données - de transport sécurisé) est fourni en tant que protocole de gestion de clés, dans lequel l'information de clé (si) est transmise dans un canal multimédia.

5. Procédé selon l'une quelconque des revendications précédentes, **caractérisé en ce que** l'information d'identité (idi), l'information de date (di) et l'information de référence du certificat (hz) sont insérées dans des champs prédéfinis de l'en-tête (SIPH) du message SIP (INVITE (2)), et l'empreinte digitale (fp) est insérée dans un champ prédéfini du corps (C) du message SIP (INVITE), et **en ce que**, pour générer la signature (S), au moins la partie des champs prédéfinis contenant cette information est incluse.

6. Procédé selon l'une quelconque des revendications précédentes, **caractérisé en ce que** l'information de référence du certificat (hz) contient une référence plaçant le certificat dans le domaine dans lequel le message SIP (INVITE (2)) est généré.

7. Procédé selon la revendication 6, **caractérisé en ce que** l'information de référence du certificat (hz) est représentée par une spécification de connexion Internet ou une adresse URI.

8. Procédé selon l'une quelconque des revendications précédentes, **caractérisé en ce que** le message SIP (INVITE (2)) est généré dans un terminal (A, B), et **en ce que** la copie de l'information d'identité (idi) dans une zone de l'en-tête (SIPH), l'insertion de l'information de référence du certificat (hz) et la génération de la signature (S) et l'insertion dans une autre zone de l'en-tête (SIPH) sont effectuées dans le domaine du terminal (A, B) qui génère le message SIP (INVITE (2)).

9. Procédé selon l'une quelconque des revendications précédentes, **caractérisé en ce que** l'information d'identité copiée (idi') et la signature (S) sont insérées dans des zones supplémentaires de l'en-tête (SIPH) du message SIP (INVITE (2)).

10. Procédé selon l'une quelconque des revendications précédentes, **caractérisé en ce qu'**un élément de l'information d'identité SIP est également généré conformément au document RFC Standard 4474 et, en résultat, l'en-tête (SIPH) et le corps (H) du message SIP (INVITE (2)) sont signés.

11. Procédé selon l'une quelconque des revendications précédentes, **caractérisé en ce qu'**un terminal (A, B) est représenté par un dispositif terminal avec un protocole Internet ou par une passerelle ou par un serveur, et **en ce que** le domaine est représenté par un commutateur VoIP, un contrôleur de session en périphérie ou par un serveur proxy VoIP-SIP.

12. Procédé selon l'une quelconque des revendications précédentes, **caractérisé en ce que** l'empreinte digitale (fp (si)) dans le corps (C) du message SIP (INVITE (2)) est protégée par une signature conformément au document RFC Standard 4474.

13. Procédé selon l'une quelconque des revendications précédentes, **caractérisé en ce que** l'information d'identité (idi) est copiée et insérée par un serveur proxy (Proxy A(SIP)).

14. Procédé selon l'une quelconque des revendications 1 à 12, **caractérisé en ce que** l'information d'identité (idi) est copiée et insérée par un terminal (A).

15. Dispositif (A, Proxy A(SIP)), qui est associé à un domaine, et qui comprend des moyens pour mettre en oeuvre le procédé selon au moins l'une quelconque des revendications 1 à 14.
